Europäisches Patentamt

European Patent Office

Office européen des brevets

(19)

(11) **EP 1 528 452 A1**

(12) **EUROPEAN PATENT APPLICATION**

(43) Date of publication:
**04.05.2005 Bulletin 2005/18**

(51) Int Cl.⁷: **G06F 1/00**, H04L 29/06

(21) Application number: **03292680.0**

(22) Date of filing: **27.10.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **ALCATEL**
**75008 Paris (FR)**

(72) Inventors:
• **Hoche, Michael Walter**
**71701 Schwieberdingen (DE)**

• **Szabo, Peter**
**75180 Pforzheim (DE)**
• **Rössler, Horst**
**70794 Fiderstadt (DE)**

(74) Representative: **Rausch, Gabriele, Dr. et al**
**Alcatel**
**Intellectual Property Department, Stuttgart**
**70430 Stuttgart (DE)**

(54) **Recursive virus detection, protection and disinfecting of nodes in a data network**

(57)    Screening and disinfection of a computer network for viral infection by scanning data streams for viruses. When a virus (or worm) is detected at a node, the cure is applied at the node, and detection, protection and cure means are propagated recursively to other nodes which are either potential sources or potential targets of the viral infection. Each infection is thus traced back and forward systematically, curing each node on the infection path.

Figure 5

**Description**

The present invention relates to a method for efficiently screening and disinfecting a communication network, and the invention relates to a corresponding network protection means, a network node, a communication network and a computer software product.

Due to the complexity of computer systems and (tele-) communication systems, as well as the (tele-) communication networks and the emerging techniques and developments in intruding systems, it is highly challenging to keep these systems operable.

There are many techniques known for keeping software driven systems operable. Such a technique is disclosed by the US Patent No. 5,440,723. There a periodic monitoring of a data processing system for anomalous behavior is suggested that may indicate the presence of an undesirable software entity such as a computer virus, worm, or Trojan Horse by automatic scanning for occurrences of types of undesirable software entities and taking remedial action if they are discovered including informing neighboring data processing systems on a network of an occurrence of the undesirable software entity.

It is well known that virus protection means like virus patterns are deployed continuously in order to enable a disinfection system recognizing infections and applying the corresponding treatment. The deployment of software portions, especially of virus protection means is solved by a system comprising self-updating clients, realized by a managed update procedure using a network connection to a supporting server, which is e.g. known from the US Patent Application No. 6,067,351.

Contrary there are self-distributing piece of software known like the Code Red virus. This virus was one of the first of a family of new self-propagating malicious codes that exploits network systems. The Code Red worm is self-replicating malicious code that exploits a vulnerability in several servers and routers. A worm attack proceeds as follows. The virus attempts to connect to a randomly chosen host assuming that a web server will be found. Upon a successful connection the attacking host sends a crafted HTTP GET request to the victim, attempting to exploit a buffer overflow in an indexing service. The same exploit (HTTP GET request) is sent to each of the randomly chosen hosts due to the self-propagating nature of the worm.

Depending on the configuration of the host which receives this request, there are varied consequences, e.g. when the exploit is successful, the worm begins executing on the victim host. In addition to possible web site defacement, infected systems may experience performance degradation as a result of the scanning activity of this worm. This degradation can become quite severe since it is possible for a worm to infect a machine multiple times simultaneously. Non-compromised systems and networks that are being scanned by other infected hosts may experience severe denial of service. Furthermore, while the Code Red worm appears to merely deface web pages on affected systems and attack other systems, the indexing vulnerability it exploits can be used to execute arbitrary code in the local system security context. This level of privilege effectively gives an attacker complete control of the victim system.

Virus scanner and disinfecter, system monitors that disinfects client systems today are well known. Another virus protection method is a consistent separation of potential virus sources. The current security-best-practice is restricting or denying network traffic and only selectively allowing portions that are really required and clean, e.g. enforced by ingress and egress filtering, implemented at the network edge or boundary, typically at a firewall.

When a system becomes infected, the systems may experience performance degradation as a result of the scanning activity of the virus/worm or the cure. This degradation can become quite severe since it is possible for a virus/worm to infect a machine multiple times, even simultaneously, especially the aforementioned firewalls become a performance bottleneck.

Currently getting rid of a worm sometimes requires even to de-couple the infected network nodes systematically from the network until the whole network is clean.

Due to the exponential distribution behavior of a virus infection, the caused system degradation, and propagating (network) malfunctions, there is a need for a fast, more efficient and practicable cure. Fast means the virus is eliminated (at) once. Efficient means using few resources, only, at least no long term degradation, and practicable means self-organized or automatically.

This problem is solved by a method for screening and disinfecting a communication network for viral infection, where the communication network comprising interconnected network nodes and at least one designated network node, the network nodes comprising an operative software system, the method comprising

- scanning a plurality of data streams,
- detecting the presence of components of the computer virus at a designated network node with suitable detection means,
- applying suitable cure or protection means for ensuring an operative state in case of a virus detection,
- propagating the suitable cure or protection means and/or the suitable detection means to an originating network node of an infected data stream,

- receiving other suitable cure or protection means and/or the suitable detection means,
- curing the originating network node by applying the other suitable cure or protection means and/or the suitable detection means, if necessary, and
- propagating the other suitable cure or protection means and/or the suitable detection means to potential source network nodes (from which the virus could be received) and to potential target network nodes (where the virus could be distributed).

The problem is solved inter alia by a network protection means resided at a network node, the network protection means comprising scanning means for scanning a plurality of data streams, detecting means for detecting the presence of components of the computer virus at the network node with suitable detection means and cure or protection means for ensuring an operative state in case of a virus detection, where the network protection means comprises communication means for propagating the suitable cure or protection means and/or the suitable detection means to an originating network node of an infected data streams, and communication means for receiving other suitable cure or protection means and/or the suitable detection means, the network protection means further comprising execution means for curing the originating network node by applying the other suitable cure or protection means and/or the suitable detection means, if necessary, the communication means are formed that the other suitable cure or protection means and/or the suitable detection means are propagated to potential source network nodes (from which the virus could be received) and to potential target network nodes (where the virus could be distributed).

And the problem is solved by a network node with such a network protection means, or a communication network comprising such interconnected network nodes and at least one designated network node, the network nodes. The network protection means is preferably implemented as a computer software product.

In short words the invention is a cure (anti virus, anti worm) deployment pattern, where each infection is traced back (and forward) systematically to the originators where each node on the backward path is cured.

A virus or worm is distributed from an originator in waves of infections. When a network node detects an infection, the network node applies the cure. It knows from where the infection is coming and provides means to cure the originator. A network node receiving a cure means apply the cure means if necessary) and provide these means recursively to potential infected network nodes, originators as well as targets.

This will result in a very quick distribution of the required cure to the a dedicated (dynamically determined) set of infected network parts.

Accordingly, it is an advantage of the present invention to provide fast and effective distribution of a virus cure within a communication network.

Another advantage of the present invention is the increased (embedded) security and protection of a network yielding a higher overall reliability.

A further advantage of the present invention is the improved repair efficiency and overall networking performance.

Yet another advantage of the present invention is that the invention provides a method with an advanced deployment pattern that can even cope with worms and communication network degradations. The automatic cure requires no management or maintenance activities. It is easy to implement e.g. by integrating the method into dedicated servers, e.g. firewalls or special protection servers, or even network elements like routers.

These and many other objects and advantages of the present invention will become apparent to those of ordinary skill in the art from a consideration of the drawings and ensuing description.

**Figure. 1** is a schematic drawing of a prior art communication network.

**Figure. 2** is a schematic drawing of a prior art communication network illustrating the spreading of a virus.

**Figure. 3** is a drawing of a trace illustrating the spreading of a virus in a prior art communication network.

**Figure. 4** is a drawing of a trace illustrating the spreading of a virus with identified distribution paths identified by the method according to the invention.

**Figure. 5** is a drawing of a trace illustrating the spreading of a virus and the distribution of cure means by the method according to the invention.

Currently there is a trend in computer science to solve problems using nature-analogous methods, e.g. neuronal networks, genetic algorithms etc. The corresponding biological object to this invention is a immune system comprising among others especially antibodies.

An immune system is a complex network of specialized cells and organs that work together to defend the body against attacks by "foreign" invaders such as bacteria or viruses. It produces antibodies, a protein, in response to an antigen (often a virus or bacterium). It is able to neutralize the antigen. An antibody is one of various bodies or substances in the blood which act in antagonism to harmful foreign bodies, as toxins or the bacteria producing the toxins. Normal blood serum apparently contains various antibodies, and the introduction of toxins or of foreign cells also results in the development of their specific antibodies. "Antibody-forming cells," which are called B cells or plasma cells are dedicated to produce secreted antibodies.

The existence of a method for identifying viruses enables a network node propagating the knowledge about an a virus with something like an antibody to that virus. Removing humans from the protection process cuts the response time to a new virus from several days or even several weeks to a few hours or less. The main difficulty with today's method of updating scanners is that the distribution mechanism for signature updates is often slow, inefficient, and uncertain.

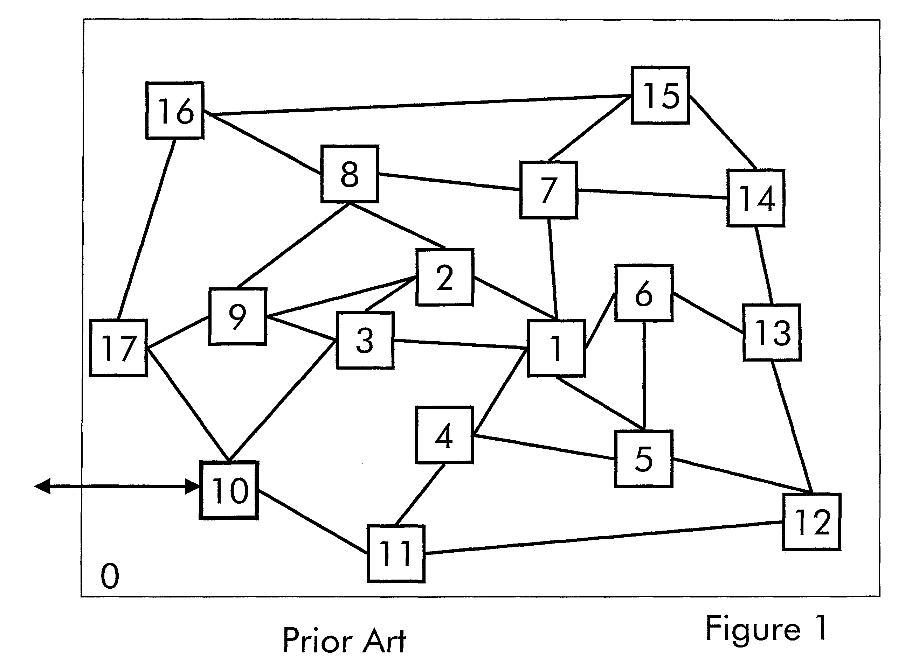

Figure 1 shows a communication network 0 of interconnected network nodes 1, 2, 3, ..., 17, e.g. computers, gateways, switches, hubs, bridges, etc. There is a gateway network node 10, e.g. a firewall connecting the communication network 0, e.g. a virtual private network or a sub-network, with a foreign communication network, illustrated by the double arrow.

Let formally the set of network nodes be V and the set of inter-connections be E, a subset of VxV. Further assume that the connections are bidirectional (for simplicity), i.e. E is symmetric. The showed communication network in figure 1 corresponds to the structure

$$V = \{1, 2, 3, 4, 5, 6, 7, 8, 9, 10, 11, 12, 13, 14, 15, 16, 17\}$$

$$E = \{[1,2],[1,3],[1,4],[1,5],[1,6],[1,7],[2,3],[2,8],[2,9][3,9],...,[16,17]\}$$

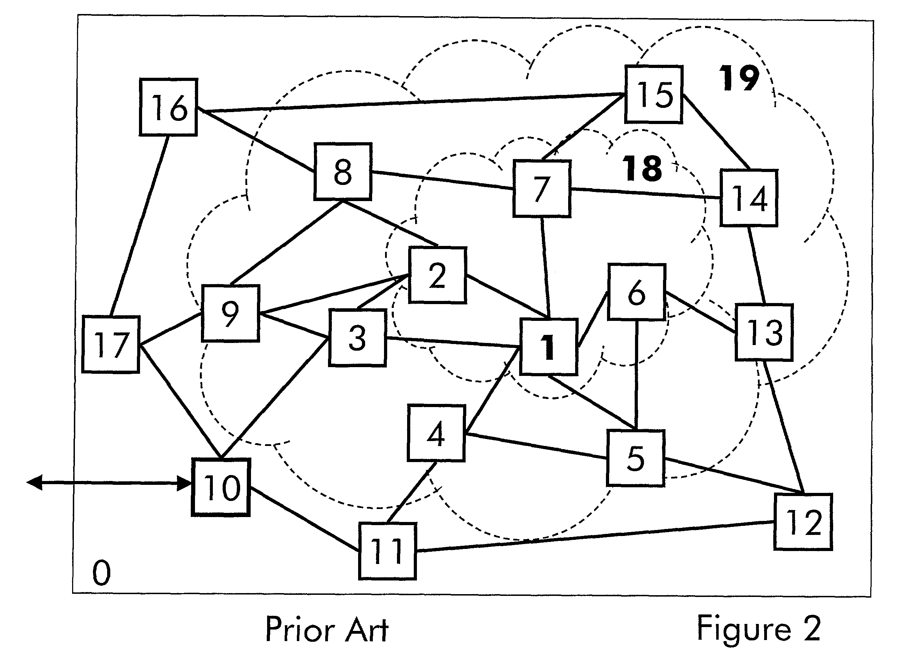

Figure 2 shows now how an infection propagates through the communication network 0. The infection starts at an origin network node 1, propagates in a first wave 18 comprising the network nodes 2, 6, and 7. In a further wave 19, the network nodes 3, 4, 5 ,8, 9, and 13, 14, 15 were infected via the corresponding interconnections e.g. [1,2], [1,6], [1,7], for the first wave and [2,8], [1,3], [1,4], [1,5], [6,5], ... for the second wave.

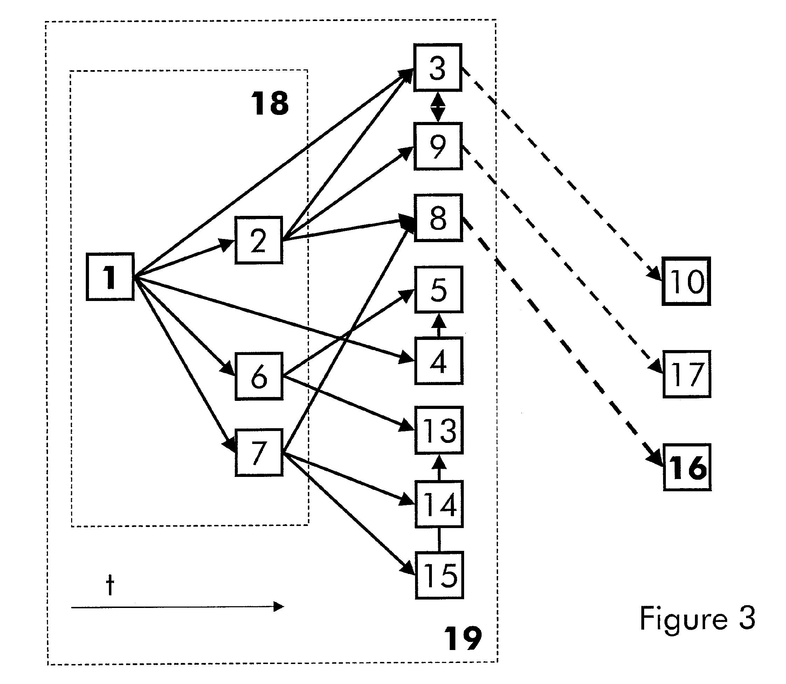

The propagation (infection) is shown in a trace diagram, figure 3. This is a diagram illustrates the time line t of the above infection process. The vertices 1, 2, 3, ..., 17 in the diagram correspond to network nodes although they could multiple occur. They could be unique identified by mentioning the occurrence number, e.g. the first occurrence of vertex 3.

The diagram illustrates the infection process in a discrete time domain. Beginning at vertex 2 the virus is propagated via the edges [1,2], [1,6], and [1,7]; infecting the network nodes 3, 6, and 7 within the first wave 18. The next snapshot shows the infection of the network nodes 3,4,5,8,9,13,14,15 via the corresponding edges [1,3][1,4],[2,3], [2,8],[2,9],[6,5],... Note that a network node could even be infected twice, e.g. the network node 3. At each time a set of infections is processed which could be presented by a set of origin-target-pairs via an edge. That means each infection corresponds one-to-one to a time indexed edge.

The time induces a kind of order, illustrated by arrows in the trace diagram, which justifies the terms backward propagation and forward propagation. The set of network nodes origin a virus identified at a certain network node forms an ideal that is generated by the corresponding vertex in the trace order that separates a potential set of infected network nodes. Simply all infected network nodes (vertices) that are before the corresponding vertex.

In the future network node 17 will be infected from network node 8 which is illustrated by the dashed arrow between the aforementioned network nodes.

Suppose that all network nodes are equipped with a network protection means according to the invention, and network node 17 scans an infecting (incoming, from network node 8 originated) data stream, detects the presence of a computer virus and applies suitable cure or protection means for ensuring an operative state, i.e. it is the designated network node in the claimed method according to the invention.

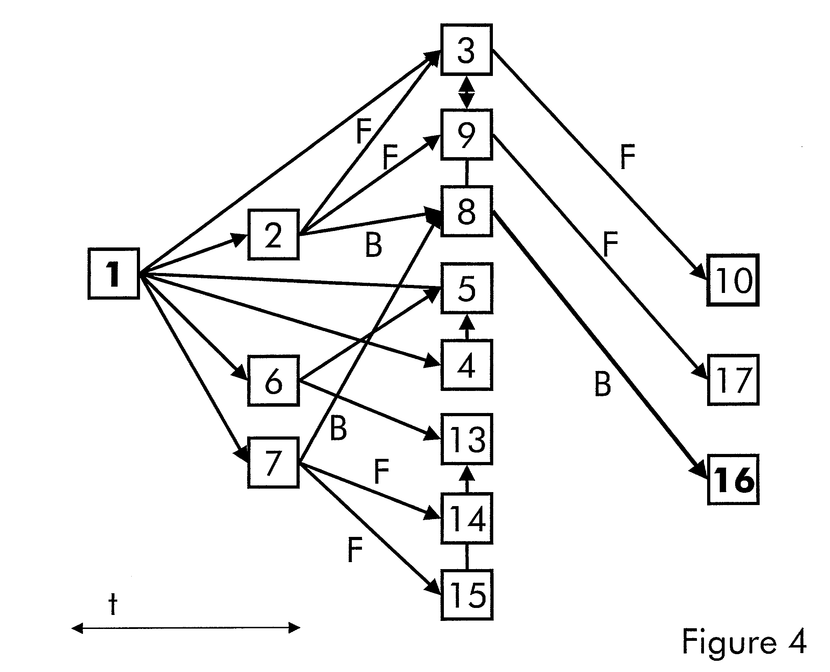

In a further step the designated network node will propagate the suitable cure or protection means and/or the suitable detection means to an originating network node of an infected data stream, which is in the example the network node 8. This fact is Illustrated in figure 4.

The network node 8 will be cured recursively by receiving the (other) suitable cure or protection means and/or the suitable detection means, illustrated by the B at the arrow presenting the infection of the designated network node 16, and will curing itself (the originating network node) by applying the (other) suitable cure or protection means and/or the suitable detection means, since it is necessary.

Suppose the local infection history is present at each network node. Then the cured network node 8 will propagate back the (other) suitable cure or protection means and/or the suitable detection means to potential source network nodes (from which the virus could be received), which are the network nodes 2 and 7.

These network nodes 2 and 7 will proceed with the disinfection according to the claimed method. I.e. receiving the suitable cure or protection means and/or the suitable detection means, curing the originating network node by applying the other suitable cure or protection means and/or the suitable detection means, since it is necessary, and propagating the suitable cure or protection means and/or the suitable detection means to potential source network nodes (from which the virus could be received), which is e.g. in the case of network node 2 the network node 1, and propagated forward to potential target network nodes (where the virus could be distributed) which are in the case of network node 2 the network nodes 3 and 9.

The ideal induced by a vertex with respect to the inverse order, like vertex 8, is also a set of potential infected nodes. To limit the procedure these network nodes have to check for an infection in order to limit the propagation.

This game continues until the network is disinfected. The forward propagating and the backward propagating ensured that all infected network nodes are reached by the cure and avoids a disinfection of non-infected network parts.

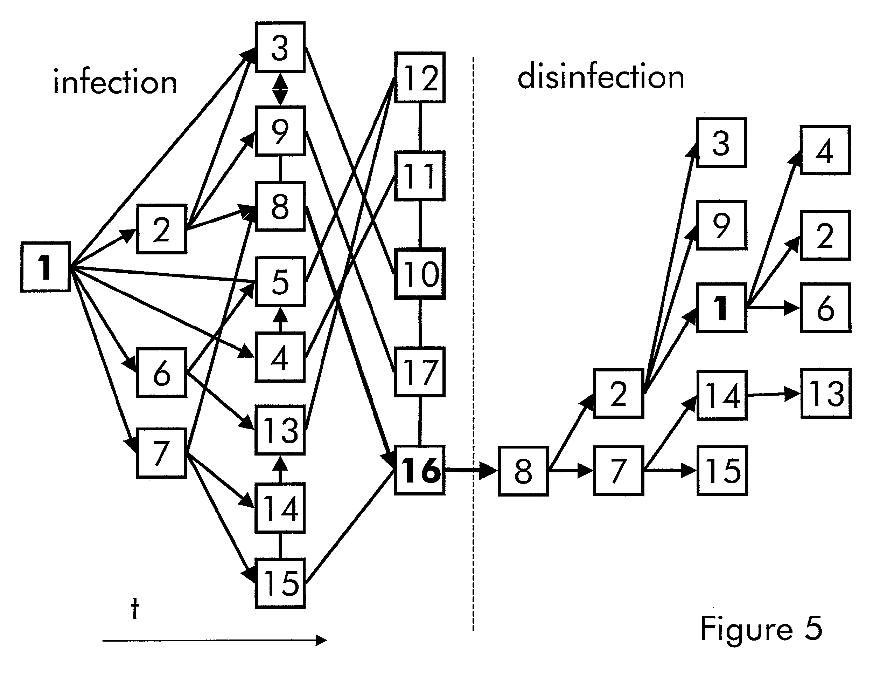

The disinfection trace is illustrated in figure 5. There the disinfection process is unfolded analogous to the infection process.

A semi formal denotation of an algorithm could be

**Procedure NETWORK_PROTECTION_MEANS**

Continuously

- Log incoming data streams
- Scan incoming data streams for known virus patterns
- In case of a detection


- apply a corresponding cure
- retrieve the (possible) originators from the log
- inform the originators about the infection, the virus pattern, and the cure


Continuously

- Listen for infection information
- In case of a received virus pattern and the cure


- Validate the infection using the virus pattern
- In case of an infection
- apply a corresponding cure
- retrieve the (possible) originators and targets from the log
- inform the (possible) originators and targets originators about the infection, the virus pattern, and the cure


Although this algorithm could be implemented in silicon a preferred embodiment is to realize it as a computer software product.

Since scanning for viruses with a large set of virus pattern is resource consuming it is suggested to maintain the set of virus patterns, i.e. to drop some pattern e.g. virus patterns corresponding to outdated techniques or viruses that attack applications that are not present etc.

For maintaining the log as well as the virus pattern set efficient hashing techniques are suggested. The logged history could be limited to the propagation time towards the whole network even without loosing the completeness and correctness of the above algorithm.

The invention is a refined principle of fighting self-replication with self-replication. When a computer detects a virus, it eliminates the infection, immunizes itself against future infection, and sends informs its neighbors, more efficiently the potential set of infected neighbors.

In summary: In biology there are certain cells, or organs carrying the infection. Today's communication networks with network nodes like computers lack of a cellular topology corresponding to organs. Therefor another method of limiting the replication is need: one based on the history of infection. The detection of a virus by a single computer can trigger a wave of antibodies that propagates along the path taken by the virus, combat the virus in its trace.

The immune system would monitor a network node for suspicious, virus-like behavior or virus patterns itself. Periodic scans for known viruses would take place. Any infections attributable to known viruses would be eliminated by repairing or restoring the infected host programs and the knowledge would be forwarded - protecting the operability of each network node in a communication network as well as the overall performance.

To enforce the method according to the invention throughout the a communication network it is even suggested capsule the suitable cure or protection means and/or the suitable detection means like a retro-virus in order to enforce the distribution. That means the originator even does not need to have an installed operable virus protection means according to the invention for receiving, applying, or propagating. Instead the capsule could be implemented as a virus also carrying the propagation strategy, e.g. the above described algorithm.

**Claims**

1. A method for screening and disinfecting a communication network for viral infection, the communication network comprising interconnected network nodes and at least one designated network node, the network nodes comprising an operative software system, the method comprising

   - scanning a plurality of data streams,
   - detecting the presence of components of the computer virus at a designated network node with suitable detection means,
   - applying suitable cure or protection means for ensuring an operative state in case of a virus detection, **characterized by**
   - propagating the suitable cure or protection means and/or the suitable detection means to an originating network node of an infected data stream,
   - receiving other suitable cure or protection means and/or the suitable detection means,
   - curing the originating network node by applying the other suitable cure or protection means and/or the suitable detection means, if necessary, and
   - propagating the other suitable cure or protection means and/or the suitable detection means to potential source network nodes (from which the virus could be received) and to potential target network nodes (where the virus could be distributed).

2. The method according to claim 1, **characterized in that** said method comprises a further step of removing cure or protection means and/or detection means after the curing and propagating.

3. The method according to claim 1, **characterized in that** said method comprises a further step of maintaining a history of curings, propagations, or infections.

4. A network protection means resided at a network node, the network protection means comprising scanning means for scanning a plurality of data streams, detecting means for detecting the presence of components of the computer virus at the network node with suitable detection means and cure or protection means for ensuring an operative state in case of a virus detection, **characterized in that** the network protection means comprises communication means for propagating the suitable cure or protection means and/or the suitable detection means to an originating network node of an infected data streams, and communication means for receiving other suitable cure or protection means and/or the suitable detection means, the network protection means further comprising execution means for curing the originating network node by applying the other suitable cure or protection means and/or the suitable detection means, if necessary, the communication means are formed that the other suitable cure or protection means and/or the suitable detection means are propagated to potential source network nodes (from which the virus could be received) and to potential target network nodes (where the virus could be distributed).

5. The network protection means according to claim 4, **characterized by** comprising control means for removing cure or protection means and/or detection means after the curing and propagating.

6. The network protection means according to claim 4, **characterized by** comprising control means for maintaining a history of curings, propagations, or infections.

7. A network node with a network protection means, the network protection means comprising scanning means for scanning a plurality of data streams, detecting means for detecting the presence of components of the computer virus at the network node with suitable detection means and cure or protection means for ensuring an operative state in case of a virus detection, **characterized in that** the network protection means comprises communication means for propagating the suitable cure or protection means and/or the suitable detection means to an originating network node of an infected data streams, and communication means for receiving other suitable cure or protection means and/or the suitable detection means, the network protection means further comprising execution means for curing the originating network node by applying the other suitable cure or protection means and/or the suitable detection means, if necessary, the communication means are formed that the other suitable cure or protection means and/or the suitable detection means are propagated to potential source network nodes (from which the virus could be received) and to potential target network nodes (where the virus could be distributed).

8. A communication network comprising interconnected network nodes and at least one designated network node, the network nodes resides a network protection means, the network protection means comprising scanning means for scanning a plurality of data streams, detecting means for detecting the presence of components of the computer virus at the network node with suitable detection means and cure or protection means for ensuring an operative state in case of a virus detection, **characterized in that** the network protection means comprises communication means for propagating the suitable cure or protection means and/or the suitable detection means to an originating network node of an infected data streams, and communication means for receiving other suitable cure or protection means and/or the suitable detection means, the network protection means further comprising execution means for curing the originating network node by applying the other suitable cure or protection means and/or the suitable detection means, if necessary, the communication means are formed that the other suitable cure or protection means and/or the suitable detection means are propagated to potential source network nodes (from which the virus could be received) and to potential target network nodes (where the virus could be distributed), such that the suitable cure or protection means and/or the suitable detection means are deployed dedicated to infected network nodes.

9. A computer software product comprising programming means that are formed to perform the steps according to claim 1.

Prior Art

Figure 1

EP 1 528 452 A1

Prior Art                                    Figure 2

EP 1 528 452 A1

Figure 3

Figure 4

EP 1 528 452 A1

infection

disinfection

*t*

Figure 5

**European Patent Office**

# EUROPEAN SEARCH REPORT

Application Number

EP 03 29 2680

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 511 163 A (HOWITZ CARSTEN ET AL) 23 April 1996 (1996-04-23) * abstract * * column 1, line 38 - line 67 * * column 3, line 31 - line 65 * * column 6, line 10 - line 56 * --- | 1-9 | G06F1/00 H04L29/06 |
| X | "REAL TIME DETECTION AND DISABLEMENT OF VIRUSES IN A DATE COMMUNICATIONS NETWORK" IBM TECHNICAL DISCLOSURE BULLETIN, IBM CORP. NEW YORK, US, vol. 39, no. 4, 1 April 1996 (1996-04-01), pages 289-291, XP000587501 ISSN: 0018-8689 | 1,4,7-9 | |
| Y | * page 289, paragraph 1 - paragraph 3 * * page 290, paragraph 3 - paragraph 4; figure 1 * * page 291, paragraph 5 * --- | 2,3,5,6 | |
| A | GB 2 384 659 A (SECURE OYJ F) 30 July 2003 (2003-07-30) | 1-9 | TECHNICAL FIELDS SEARCHED (Int.Cl.7) |
| Y | * abstract * * page 4, line 33 - page 7, line 18 * --- | 2,3,5,6 | G06F H04L |
| A | MUKHERJEE B ET AL: "NETWORK INTRUSION DETECTION INTRUSION DETECTION IS A NEW, RETROFIT APPROACH FOR PROVIDING A SENSE OF SECURITY IN EXISTING COMPUTERS AND DATA NETWORKS, WHILE ALLOWING THEM TO OPERATE IN THEIR CURRENT OPEN MODE" IEEE NETWORK, IEEE INC. NEW YORK, US, May 1994 (1994-05), pages 26-41, XP002951602 ISSN: 0890-8044 * page 26 - page 27 * * page 34 - page 35 * --- -/-- | 1-9 | |

The present search report has been drawn up for all claims

| Place of search | Date of completion of the search | Examiner |
|---|---|---|
| MUNICH | 23 March 2004 | San-Bento Furtado, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 03 29 2680

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | YAU S S ET AL: "COMPUTER NETWORK INTRUSION DETECTION, ASSESSMENT AND PREVENTION BASED ON SECURITY DEPENDENCY RELATION" PROCEEDINGS OF THE 23RD. ANNUAL INTERNATIONAL COMPUTER SOFTWARE AND APPLICATIONS CONFERENCE. ( COMPSAC'99 ). PHOENIX, AZ, OCT. 27 - 29, 1999, ANNUAL INTERNATIONAL COMPUTER SOFTWARE AND APPLICATIONS CONFERENCE, LOS ALMITOS, CA: IEEE COMP. SOC, US, vol. CONF. 23, 27 October 1999 (1999-10-27), pages 86-91, XP000895489 ISBN: 0-7803-5956-9 * page 86, left-hand column * * page 87 * * page 88, left-hand column * * page 89 - page 90, left-hand column * ----- | 1-9 | |

TECHNICAL FIELDS SEARCHED (Int.Cl.7)

The present search report has been drawn up for all claims

| Place of search | Date of completion of the search | Examiner |
|---|---|---|
| MUNICH | 23 March 2004 | San-Bento Furtado, P |

**ANNEX TO THE EUROPEAN SEARCH REPORT
ON EUROPEAN PATENT APPLICATION NO.** EP 03 29 2680

This annex lists the patent family members relating to the patent documents cited in  the above-mentioned European search report.
The members are as contained in the European Patent Office EDP file on
The European Patent Office is in no way  liable for these particulars which are merely  given for the purpose of information.

23-03-2004

| Patent document cited in search report | | Publication date | Patent family member(s) | | Publication date |
|---|---|---|---|---|---|
| US 5511163 | A | 23-04-1996 | DK | 55092 A | 29-10-1993 |
| | | | DK | 126492 A | 29-10-1993 |
| | | | AT | 161110 T | 15-12-1997 |
| | | | AU | 4060093 A | 29-11-1993 |
| | | | DE | 69315690 D1 | 22-01-1998 |
| | | | DE | 69315690 T2 | 02-07-1998 |
| | | | DK | 170544 B1 | 16-10-1995 |
| | | | WO | 9322723 A1 | 11-11-1993 |
| | | | EP | 0638184 A1 | 15-02-1995 |
| GB 2384659 | A | 30-07-2003 | WO | 03063431 A2 | 31-07-2003 |

EPO FORM P0459

For more details about this annex : see Official Journal of the European Patent Office, No. 12/82